# EUROPEAN PATENT APPLICATION

(11) **EP 1 889 777 A1**
(43) Date of publication of application: **20.02.2008**
(21) Application number: 07386017.3
(22) Date of filing: 20.07.2007
(51) Int. Cl.: B62D 63/06, B60P 3/07

(54) **Folding trailer for carrying motorcycles**

(30) Priority: 27.07.2006 GR 20060100443
(71) Applicant: Poupalos, Markellos, 19011 Makalasa, Attikis (GR)
(72) Inventor: Poupalos, Markellos, 19011 Makalasa, Attikis (GR)

(57) **Abstract**

The folding trailer, with four types A-B-C-D for the transportation of two wheel motorcycles, has two main parts. One part is the web and it consists of four parts (25,27,29,23). The unfolded assembly of these parts has the form of a "U" channel. This assembly opens and closes lengthwise, firstly by means of joints (1,2,3,4) fitted at the ends of the four parts: part (25) folds within part (27), whereas part (23) folds onto part (29) and then both these couples (25,27) and (23,29) slide into each other. The entire assembly is connected to the second part, the suspension frame (33). In the case of type C, the frame (33) unfolds to the sides of part (29) and the wheels of the folding trailer are fitted onto this frame (33). The wheel axles are trapped within the hubs (2) of the frame (33) by means of two yokes (1) (safety pins) for frequent mounting, dismounting of the wheels.

Figure 1 illustrates the trailer, fully developed, ready to receive the motorcycle. The motorcycle is secured starting with the front belt figure 1 (a) to the front wheel and then belts (b,c) to the top part of the rear wheel, where we wind a small belt with loops for the clamps (tighteners) (d,e) for the safe transportation of the motorcycle.
Figure 28 illustrates the trailer folded and ready for storage.

## Description

This patent refers to a folding trailer for the transportation of two-wheel motorcycles.

There are many trailers for transporting motorcycles. However, they are bulky and single-piece like baggage trailers, with great weight, and most importantly, they take up too much storage space when not used. This is why motorcycle owners cannot use them, since they must also have the space needed for storage. Moreover, their weight prevents easy handling. Their main disadvantage is their volume.

The advantages offered by this patent that has been manufactured in four different types, A, B, C, D are: Firstly, that the trailer is folding, and when it is folded its volume is reduced so storage is possible even in very small spaces such as the luggage compartment of small cars. Secondly, it may be packed for storage in a suitcase (duffel bag) with dimensions 72x26 cm, height 25 cm, depending on the volume or type of the motorcycle, with the exception of the two wheels that are stored in a different suitcase (duffel bag). The weight, including the suitcase, is 17.5 kg for 150 - 250 cc motorcycles and approximately 22 kg for larger motorcycles, e.g. 500 - 600 cc. Thirdly, the low weight allows lifting by medium built individuals (the folding trailer types fits in a single suitcase (duffel bag) with the wheels).

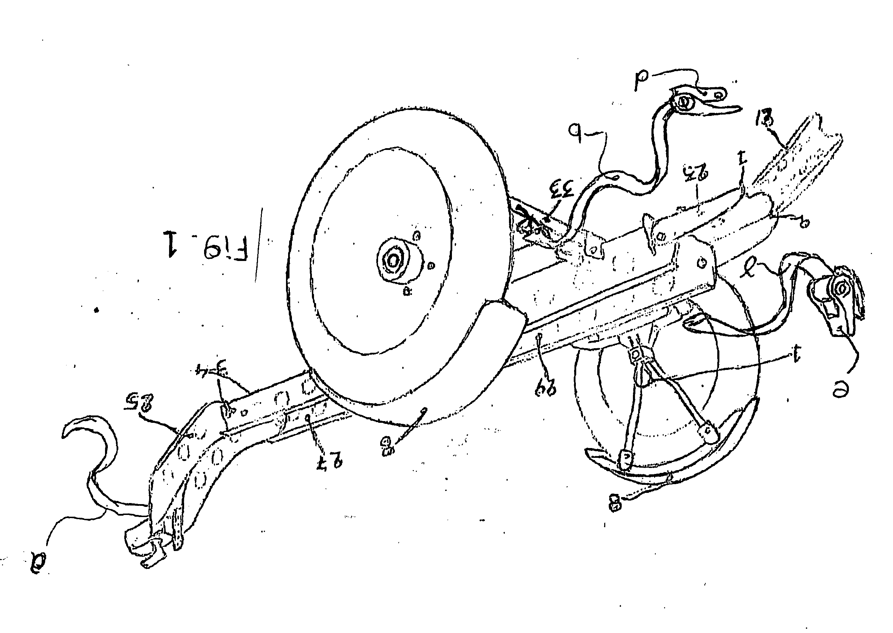

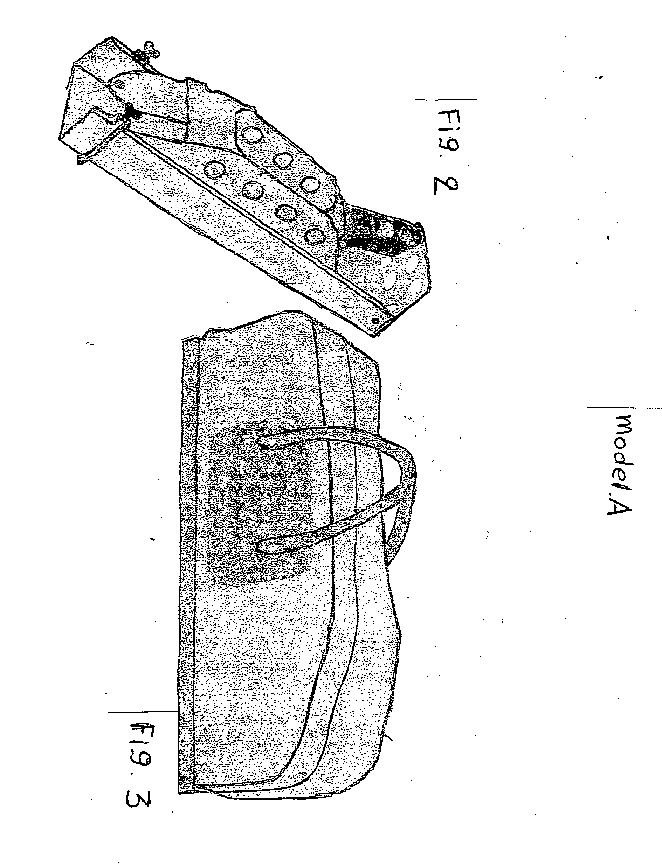

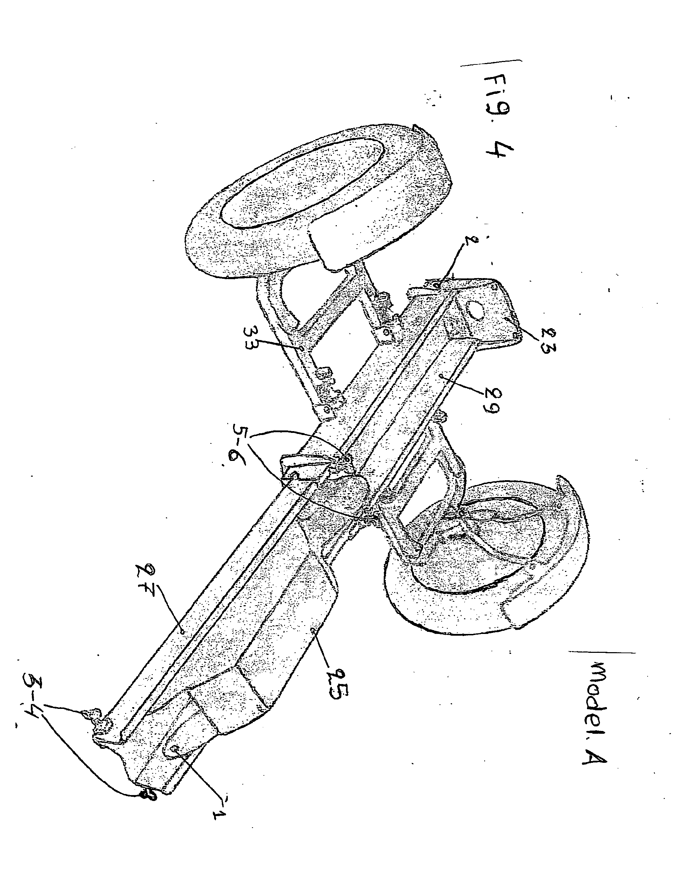

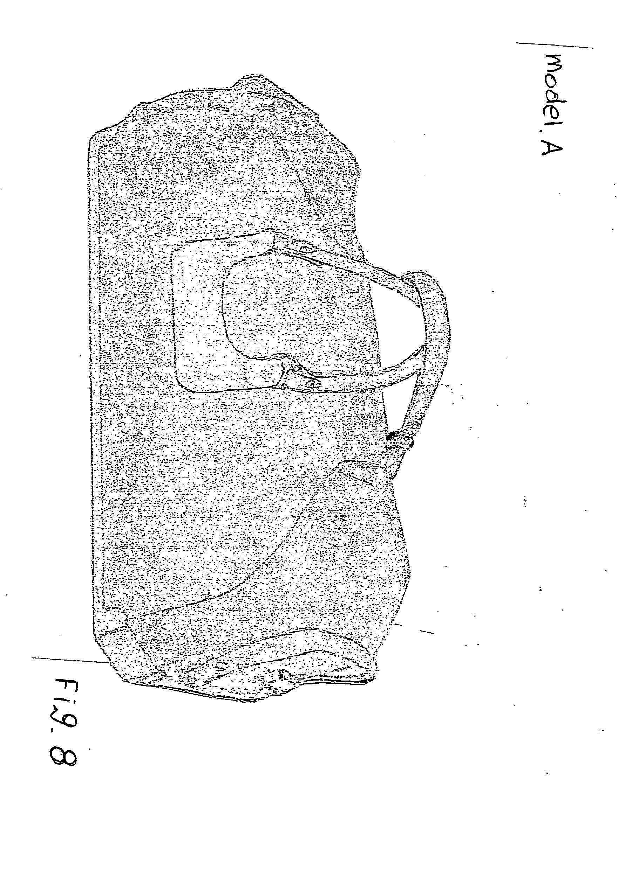

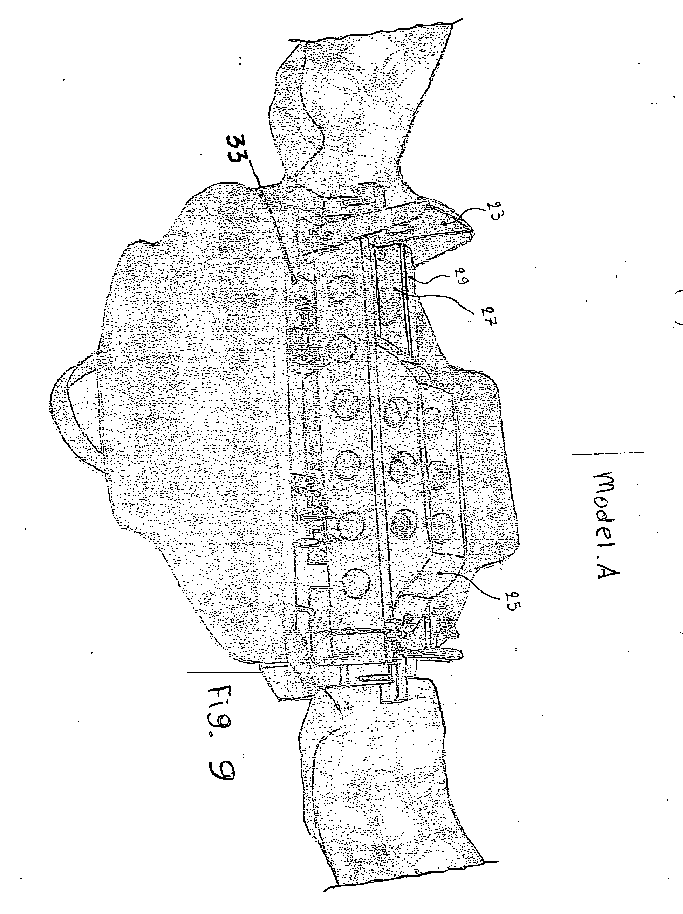

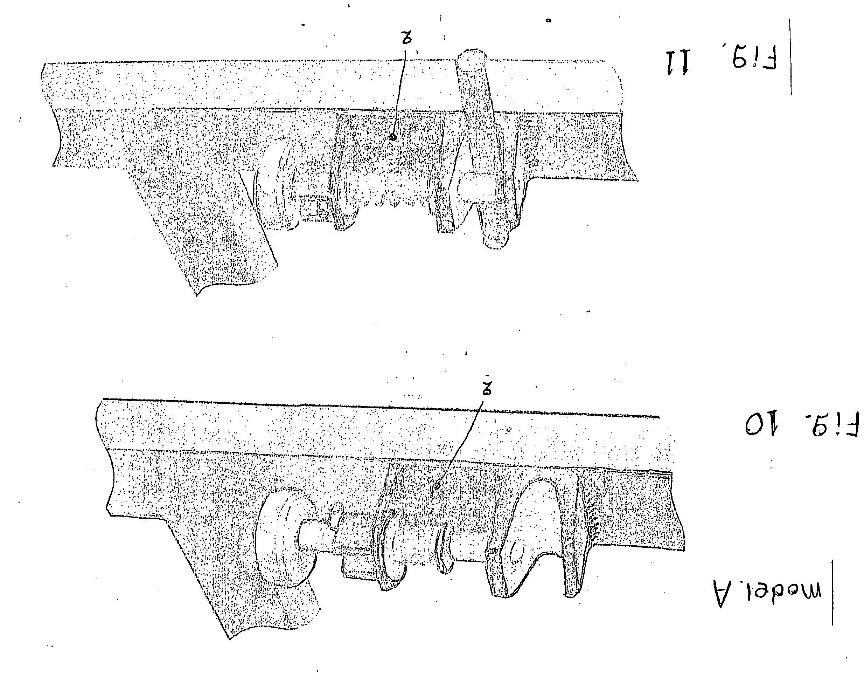

The folding trailer extends as far as needed in order to fit a motorcycle being moved due to the fact that it is no longer being used or it has broken-down and then it shrinks so as to fit in a suitcase (duffel bag) 72x25 cm, height 22cm and be stored in the luggage compartment of a car. This way, the motorcycle user no longer has to load the motorcycle on a bulky, one-piece, heavy trailer in order to move it. Also, such one-piece trailers are hard to park and store due to their great volume and weight, not to mention that there is absolutely no chance that such a trailer will fit in a luggage compartment or be carried in a suitcase (duffel bag). On the contrary, the folding trailer fits almost anywhere in the house or the balcony and may often be placed in the luggage compartment of the car without difficulty, since it may be folded and lifted or rolled when carried in a suitcase (figure 3, 8, 9, 26) equipped with wheels.

Another advantage is that it relieves the owner from transportation expenses. For instance, if you are to carry a singe-piece trailer in a ferry, you must pay freight. On the contrary, no freight is required for the folding trailer, whether carried in a suitcase or not, or the car's luggage compartment or not. Also, when the motorcycle is broken, it may be transported with a private owned car and the folding trailer, without any need for hiring road assistance services.

The differences stated below refer to the different types of folding trailers, A, B, C and D and do not affect the advantages offered by all types, A, B, C and D compared to the one-piece trailers offered in the market.

Although all folding trailer types (A, B, C and D) are intended for the transportation of motorcycles, they have several structural differences. The advantages offered by each type are different. These are as follows: in type A, the suspension frame (33) may be detached from the web composed by parts (25, 27, 29, 23) for sorting purposes (web, frame) within a suitcase. The advantage offered is that it requires a small sized suitcase.

In type B, the suspension frame (33) is not detachable, since this folding trailer is intended for motorcycles of small cylinder capacity. Compared to the other trailer types, A, C and D, its volume and weight is 1/3 of the respective magnitudes when the frame is mounted. This folding trailer is intended for frequent use. An additional advantage is that it fits in the luggage compartment, even with the wheels mounted on the trailer. This way, you can save both time as well as work, since one of the goals sought after is quick folding - unfolding of the trailer.

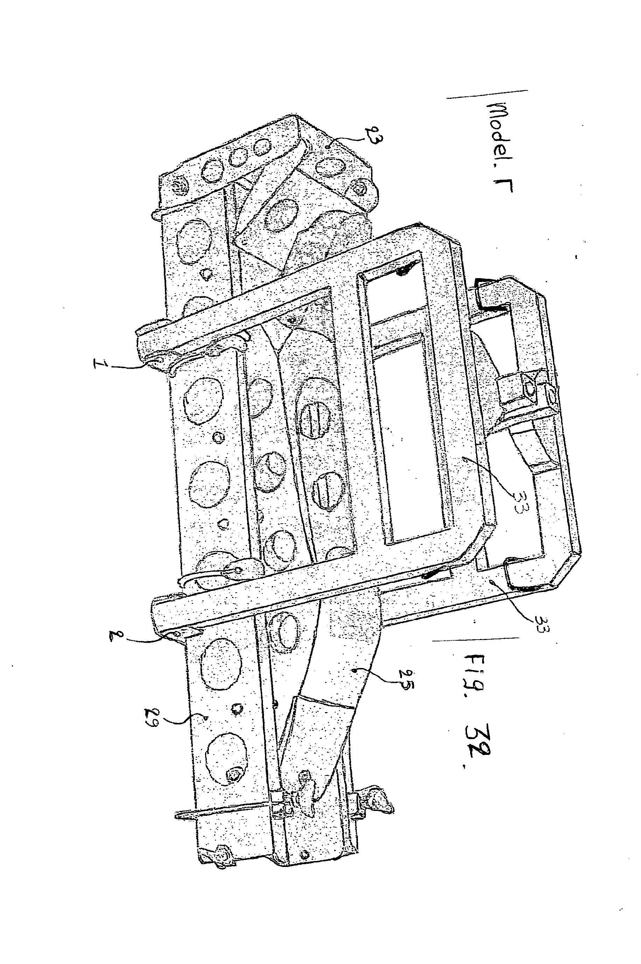

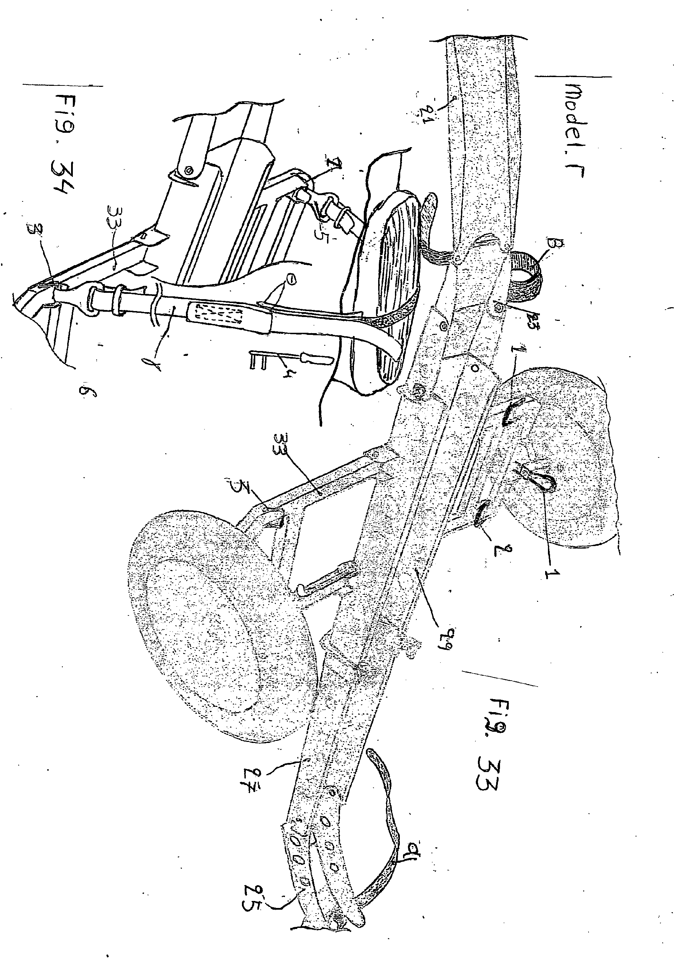

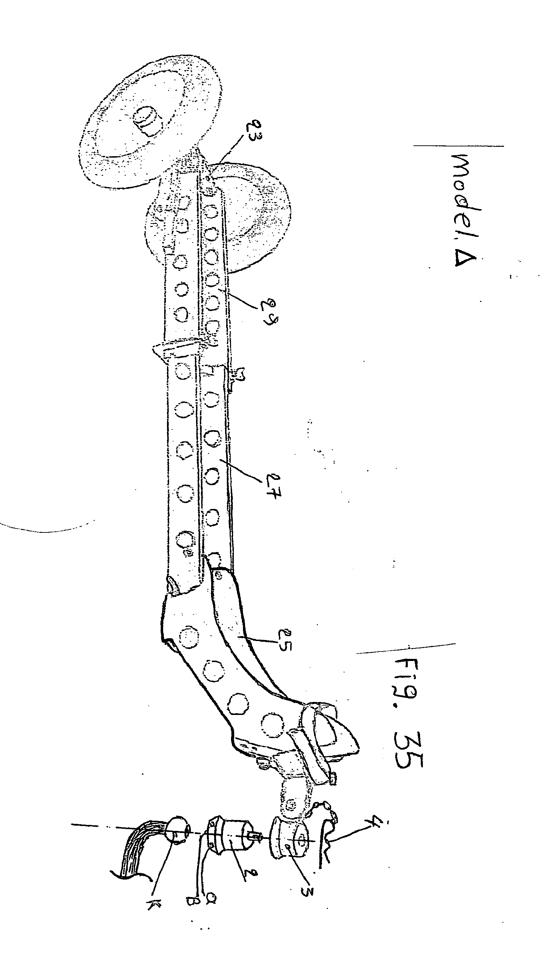

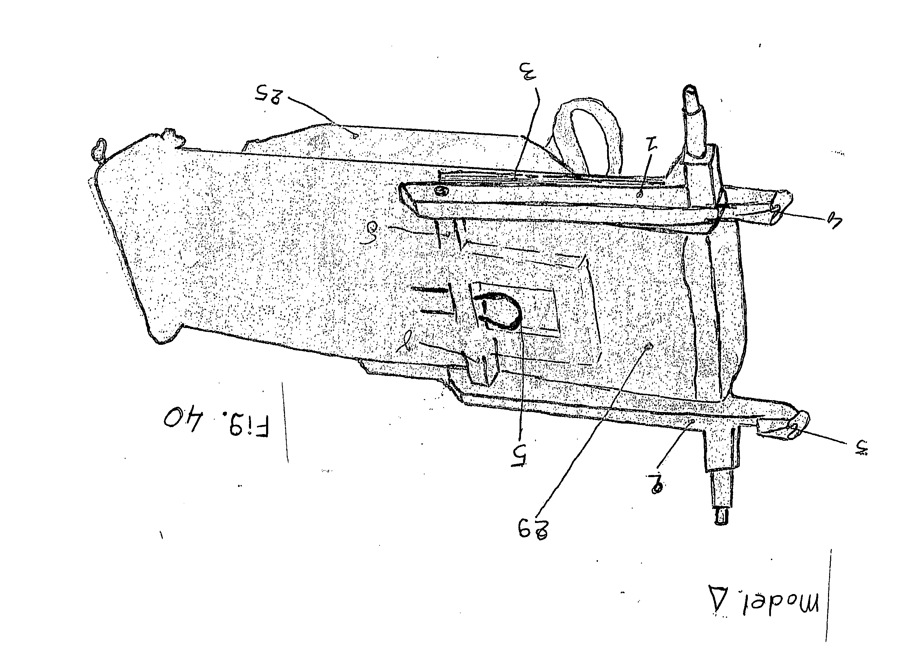

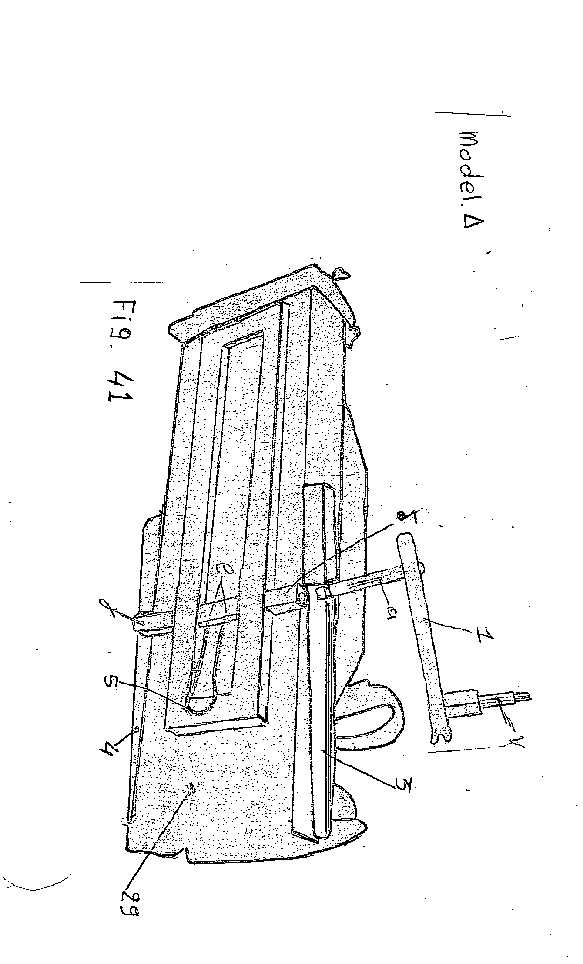

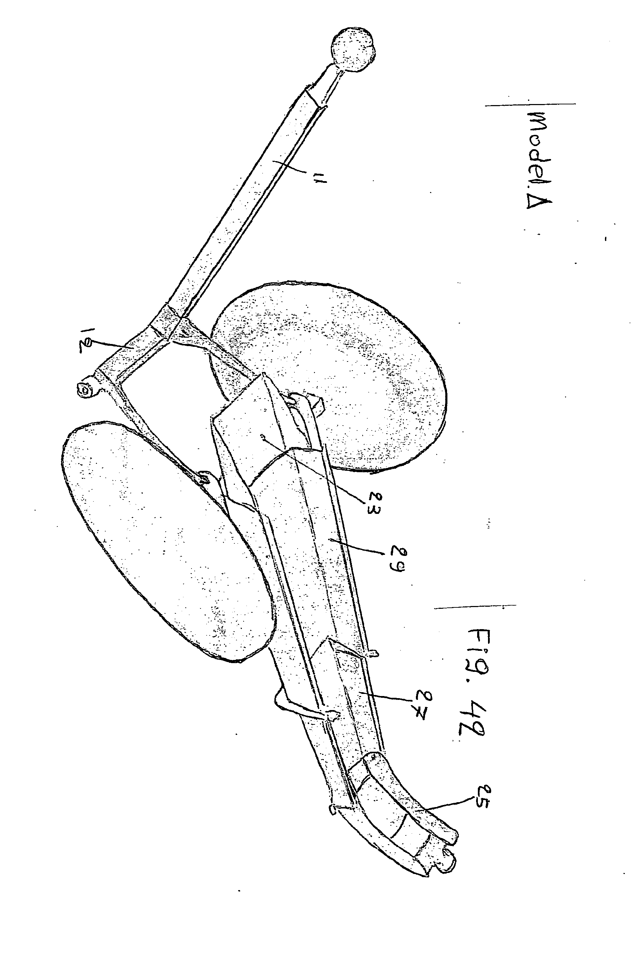

The suspension is non-detachable in type C (33), which offers the advantage that the frame is divided and each half folds onto the side elements of the web (29) with joints (1, 2) figure 32. In this way, the entire trailer becomes a single assembly with the wheels set between the two folded half-frames, figure 26. The entire assembly is inserted in a 78x20 cm, 50 cm high parallelepiped suitcase (duffel bag) in the case of large motorcycles. The suitcase is equipped with wheels for easy transportation, since in this case the weight is increased since it includes the wheels. Total weight 28 Kg.

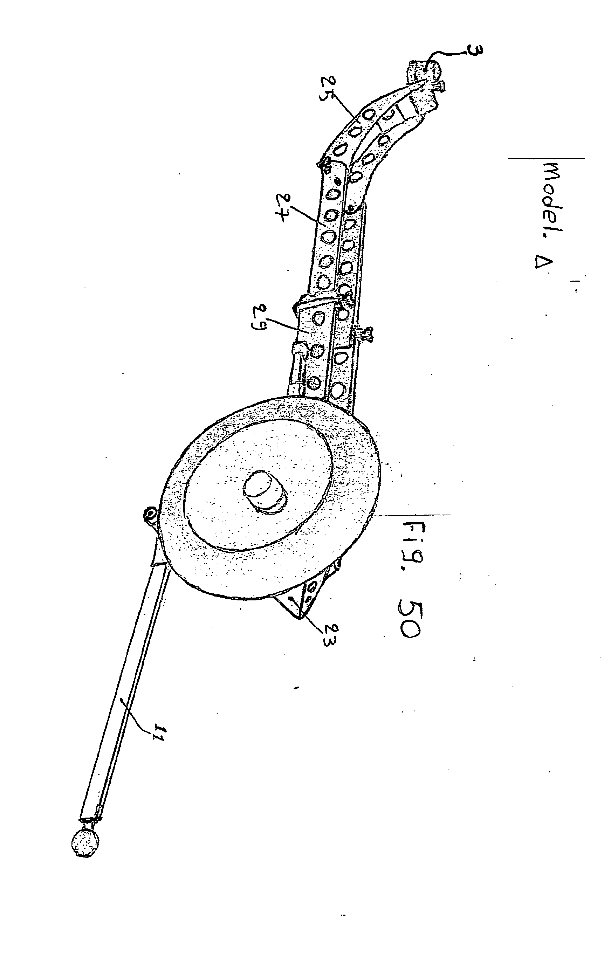

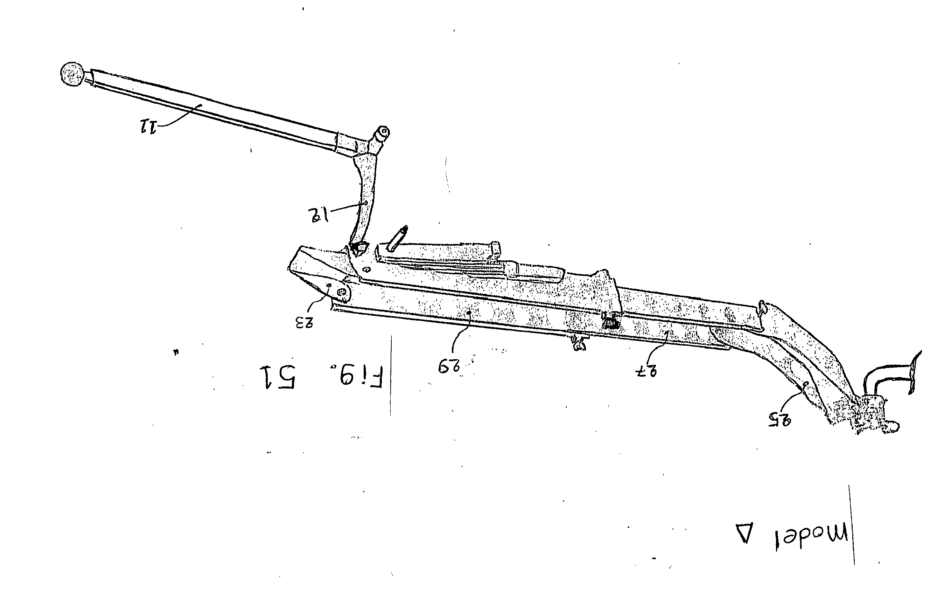

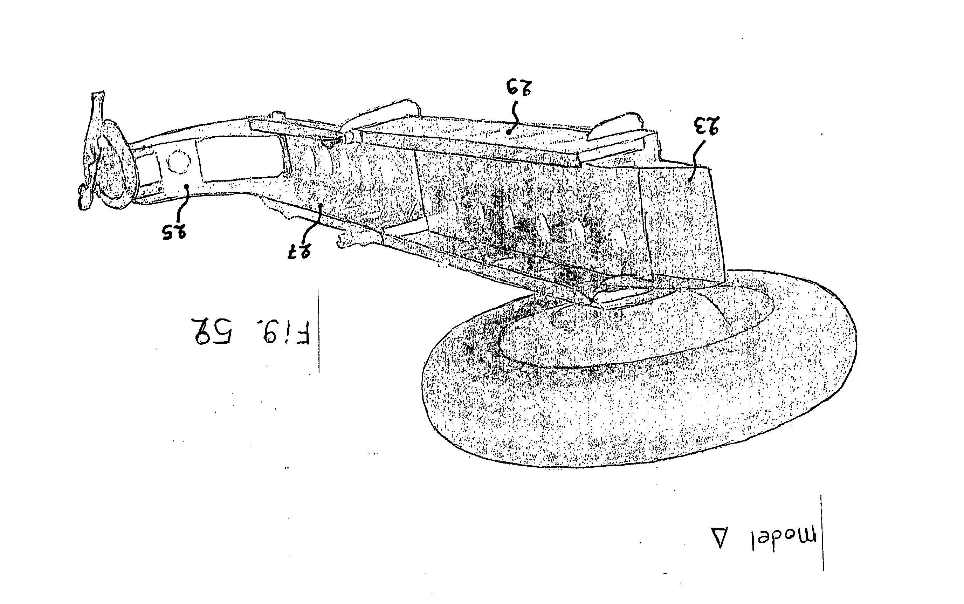

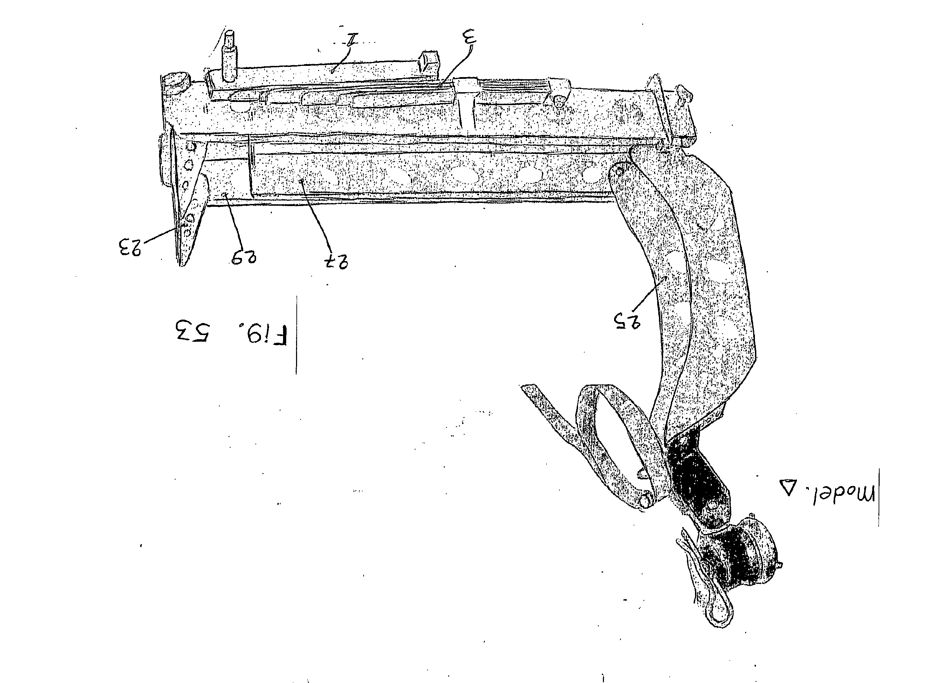

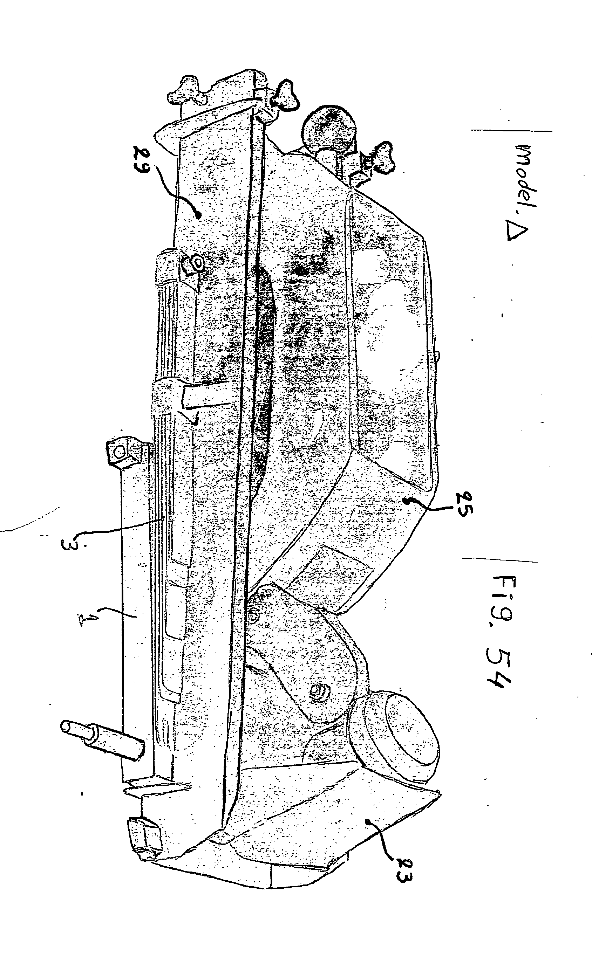

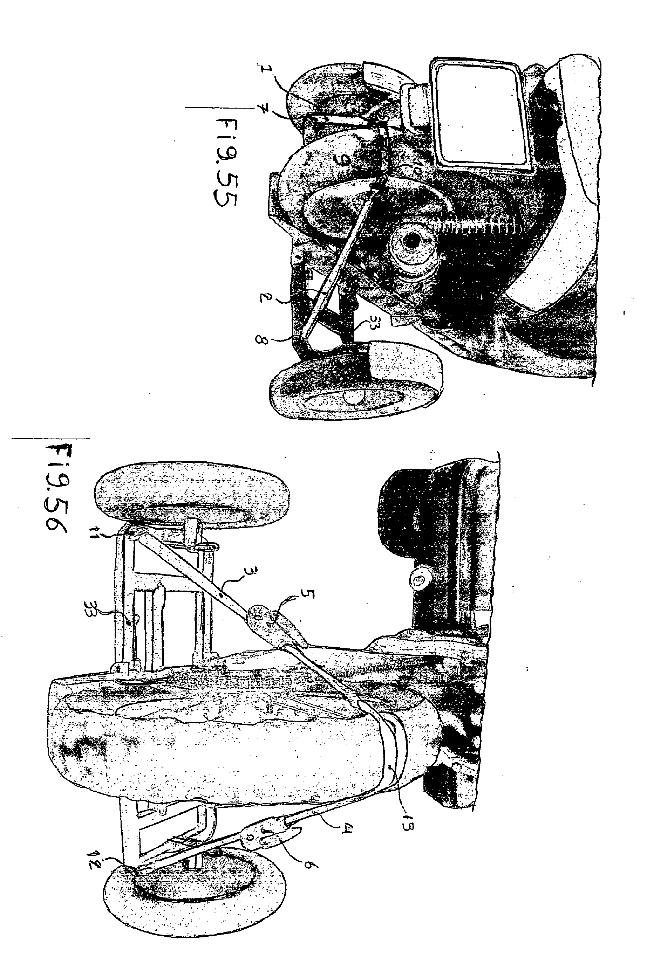

Type D does not have a suspension frame. Advantages: firstly, smaller volume since the suspension consists of two single forks (1), (2) that are adjacent to the springs on the side and parallel to the web (2( and function independently: It fits in a suitcase 60x20 cm, height 18 cm in the case of small cylinder capacity motorcycles and in a 70x23, height 22 cm suitcase for greater motorcycles. The wheels are transported in another suitcase for better sorting. Type D is also different than types A, B and C with regards to the motorcycle loading method, which does not involve the use of a ramp (21), whereas types A, B and C require the addition of a ramp (21) in order to load the motorcycle. Type D does not need a ramp, since the motorcycle is loaded on it before mounting the wheels on the trailer, which is connected to the vehicle. This means that the rear part of the unfolded trailer rests on the ground, thus the motorcycle is easily pushed on it. Then, the rear part of the unfolded trailer is lifted, using the special lever, figure 39 (11, 12) (while the front part is already connected to the vehicle), to the required height for mounting the wheels. The wheels are inserted - extracted easily and swiftly. Then, the wheels rest on the ground by reversing the lever in figure 42, and the lever is automatically released so that the trailer may be ready for towing.

Presentation and brief description of four types of folding trailers for the transportation of motorcycles, that are used for the same work.
The types are presented in the following order: Type A, B, C and D.

Type A: suspension frame detachable from the folding web as shown in figure 1. Figure 1 illustrates the trailer, in completely developed form, ready to receive the motorcycle, that is pushed onto the folding trailer with the addition of the ramp (21) hanging from the rear part of the web (23) of the folding trailer, by means of two pins fitted on the ends of the ramp (1) and (2).
The web is folded starting with part (25), figure 4, loosening screws (3), (4) and then loosening screws (5) (6) and pushing so that part (23) slides into part (29), figure 5. Finally the rear small part (23) is folded upwards and folding of the trailer's web is completed. Finally, the suspension frame in figure 6 is detached, by unlocking the four safety latches 1 - 2 - 3 - 4 in figure 7, latch details figures 10, 11 (2). After having removed the wings and the wheels.

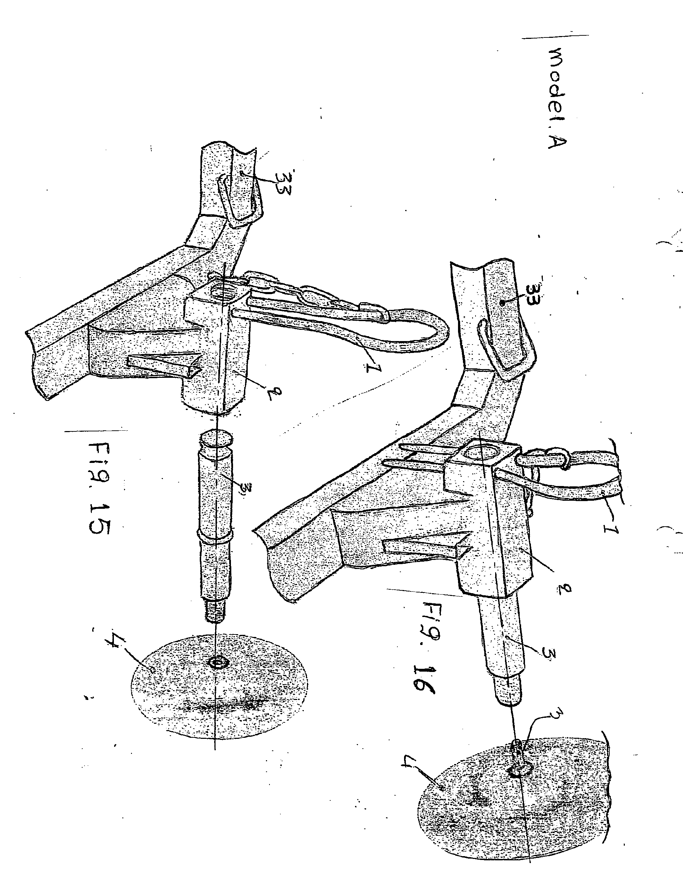

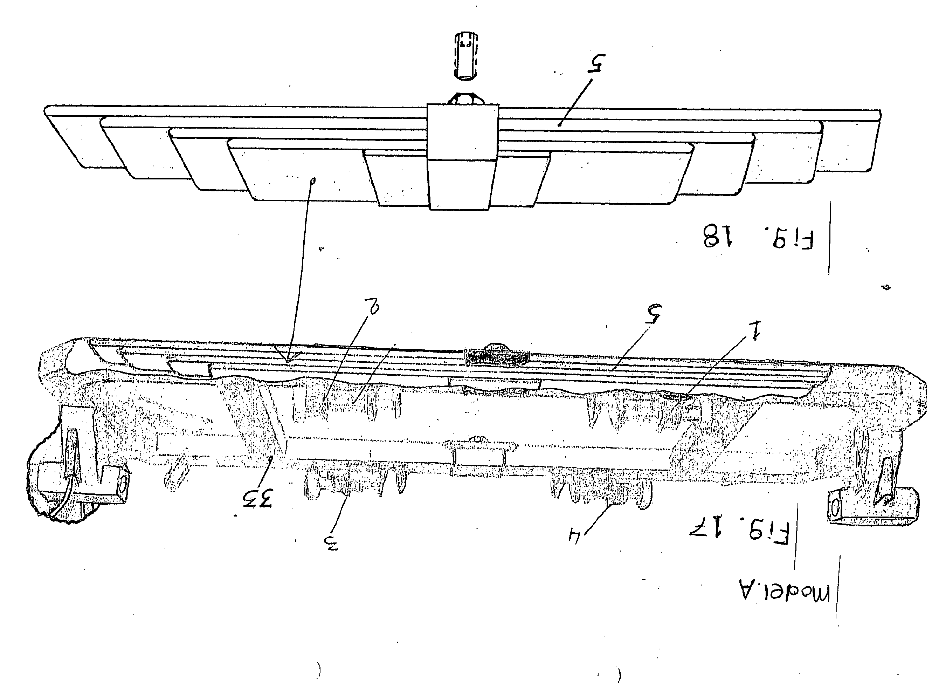

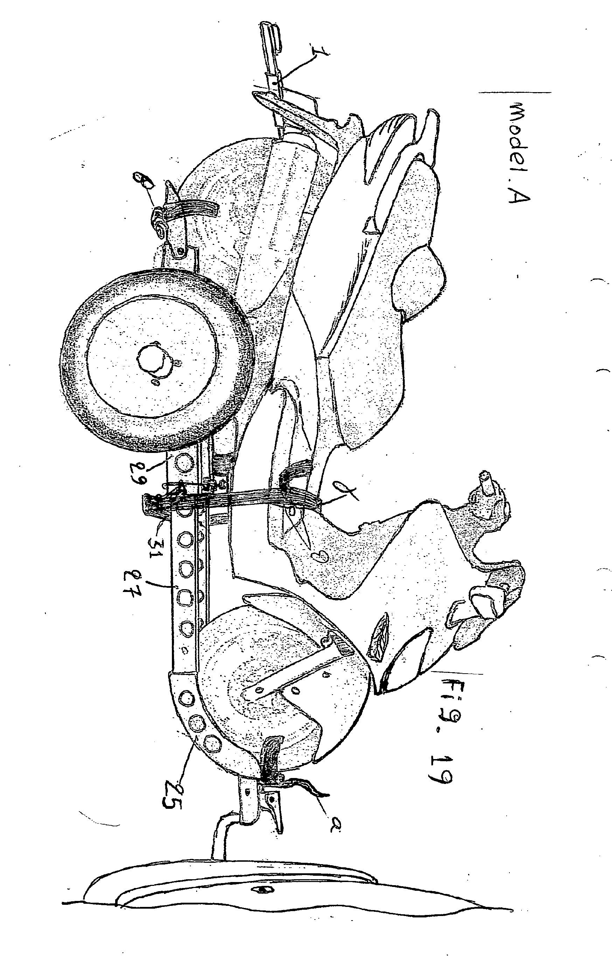

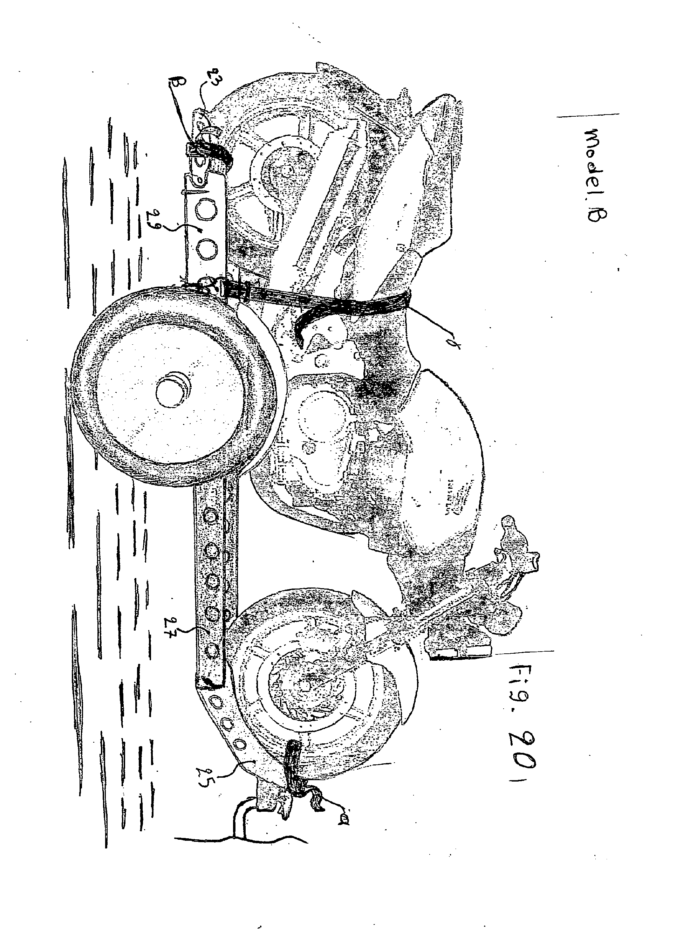

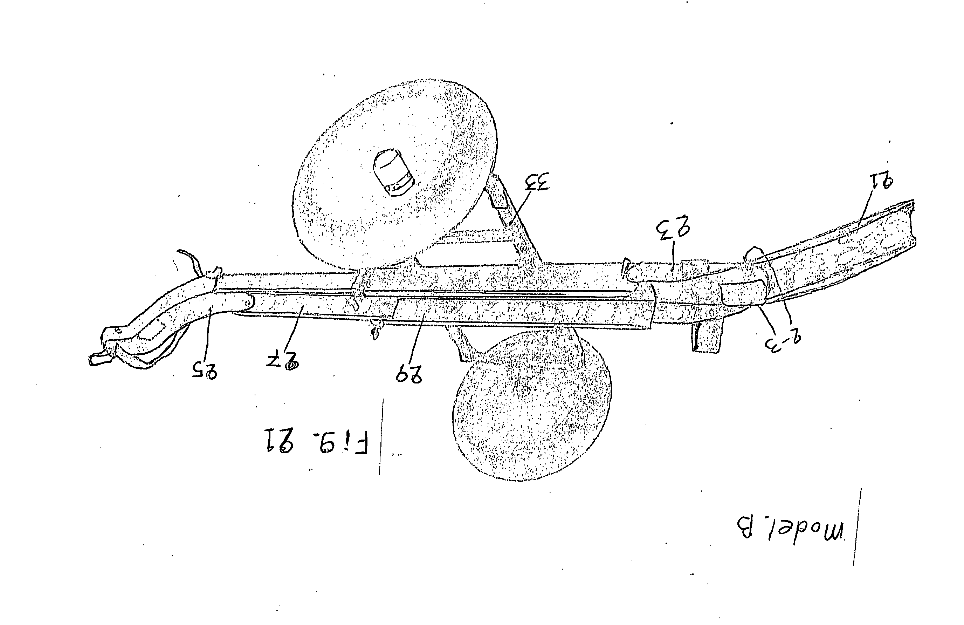

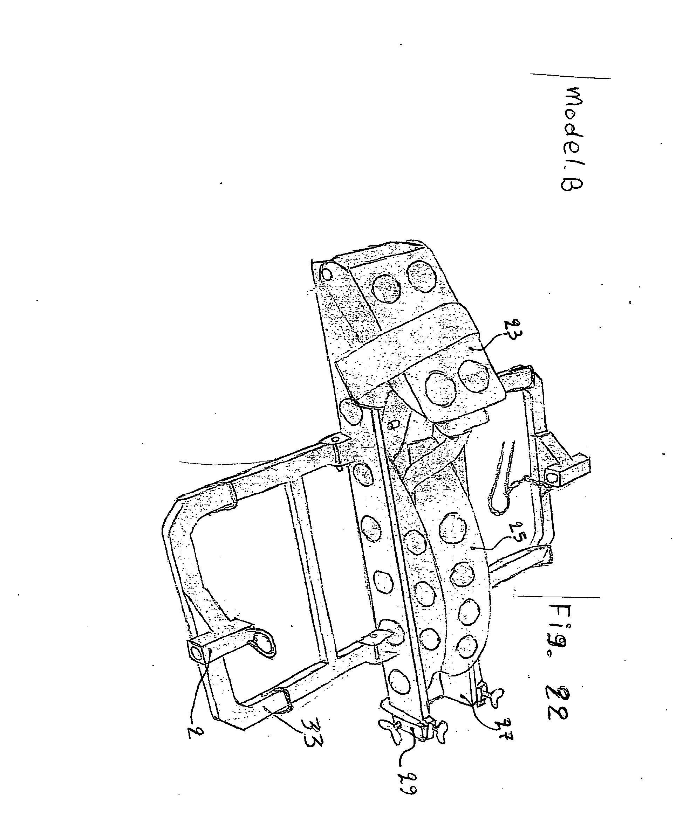

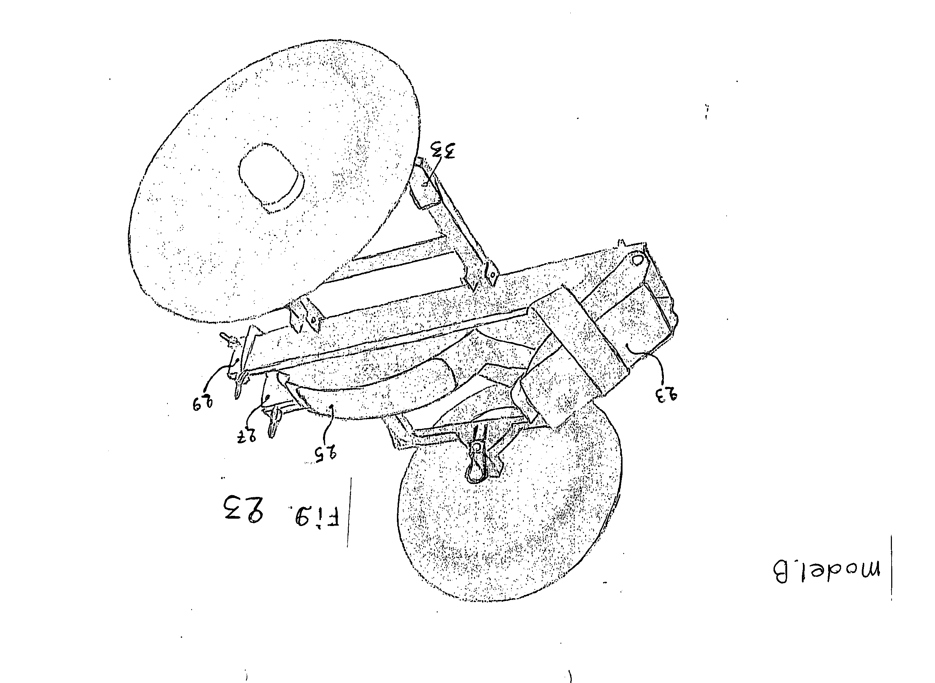

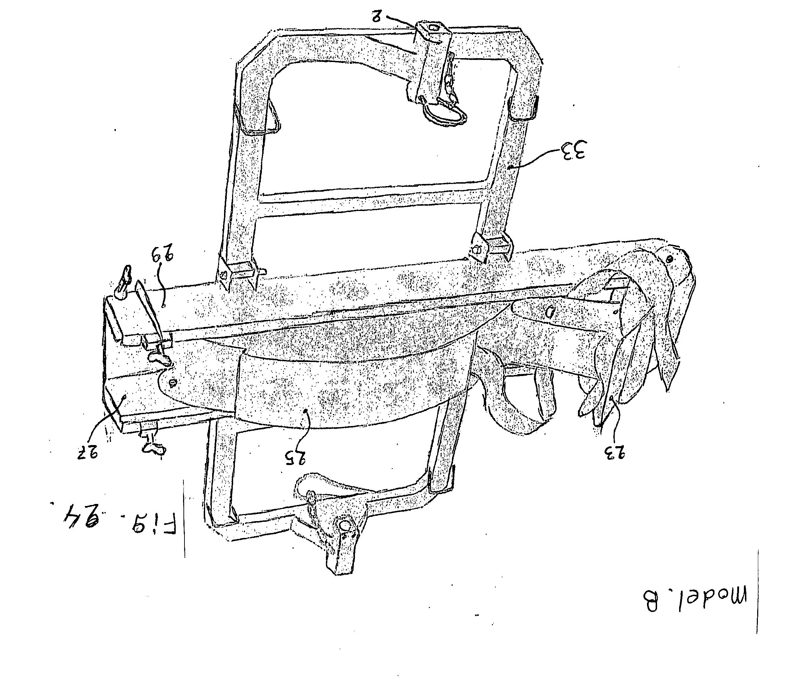

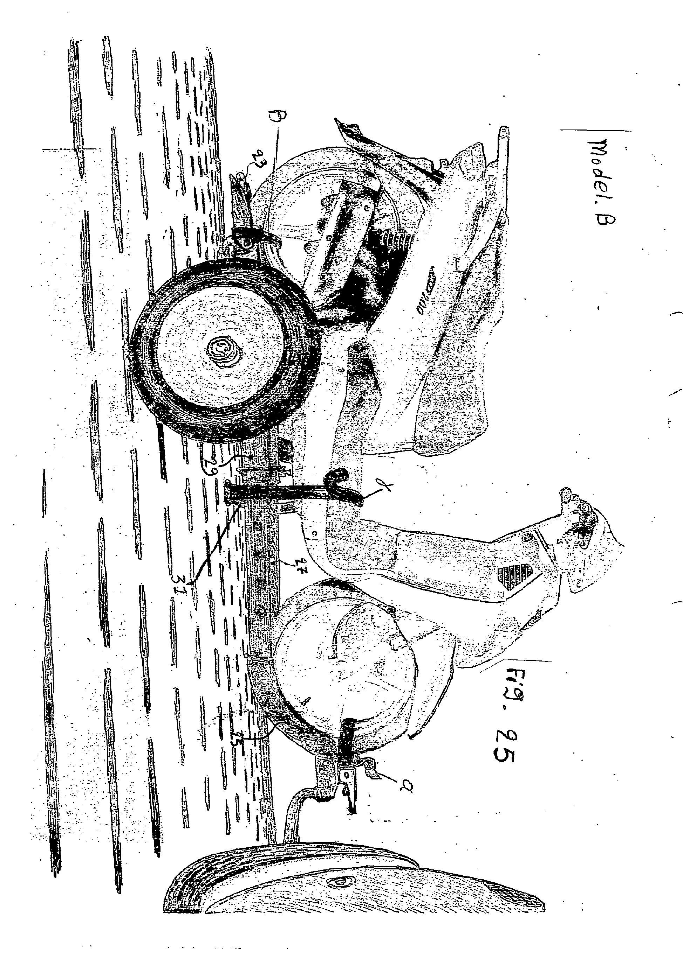

The wings (8) are removed by pulling upwards, removing the arms (a), (b) of the wings from sockets (1), (2), figures 12, 13, 14, and then folding the arms (a), (b) into the cavity of the wings so that they may in turn be stored in the suitcase (duffel bag) along with the entire folding trailer.
The wheels are removed in a simple way, figures 15, 16. This is effected by pulling upwards the safety pins (1) located on the top part of the socket hubs (2) where the axles (3) of the folding trailer wheels (4) are inserted.
The suspension frame (33) may be detached once the web is folded and the wings and wheels are removed, (suspension springs are provided to the interior of the frame (33), which pass through the arms of the frame (33), figures 17, 18 and allow for putting the entire assembly in a suitcase (duffel bag) with the exception of the two wheels, for which a separate duffel bag is used).

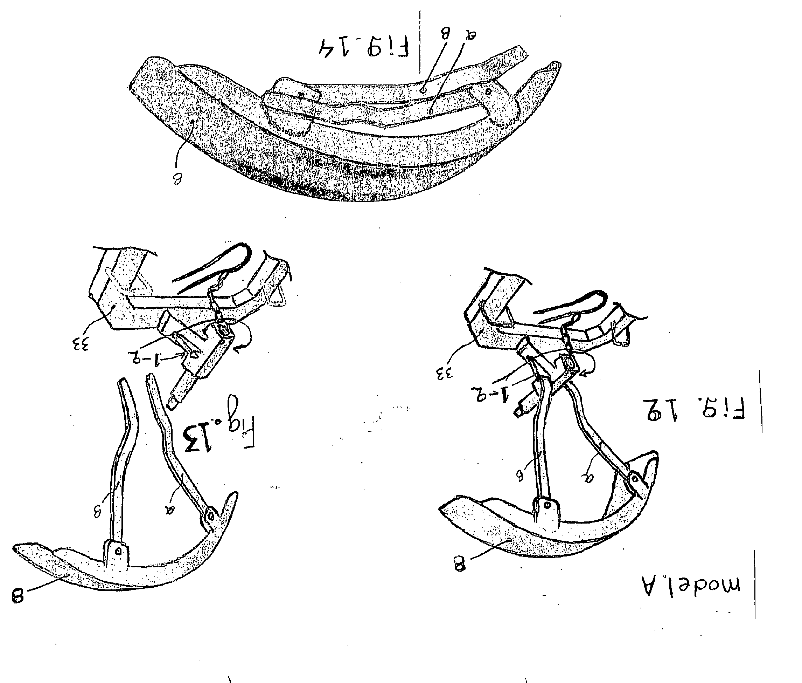

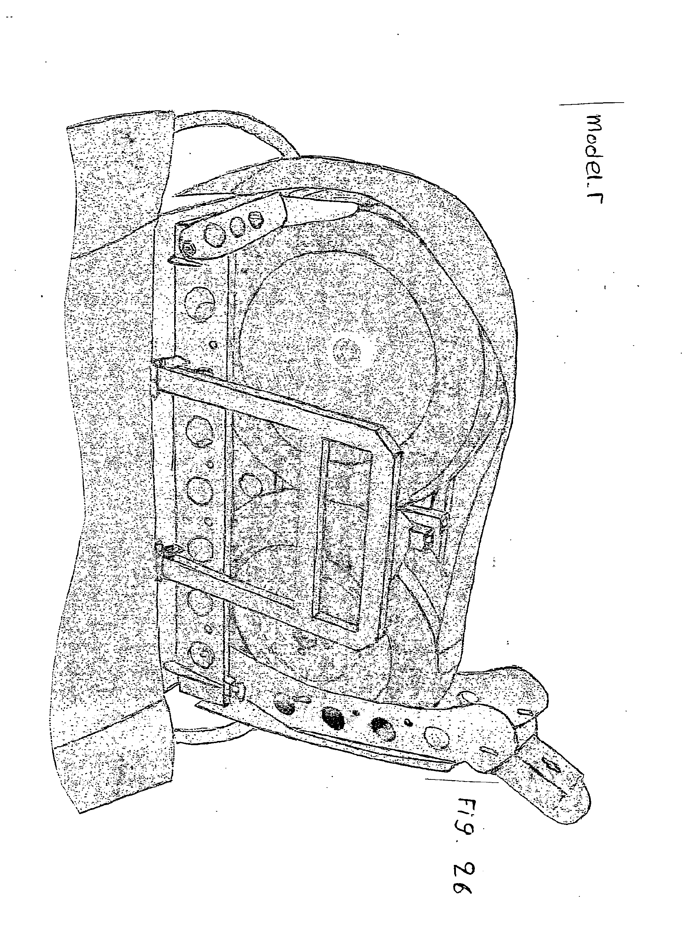

The order of inserting into the suitcase (duffel bag) is: first the suspension frame (33), with the folded web on top, figure 9 and the ramp (21) the folding rod (20) bearing the light signal (brakes & hazard lights) and the lifting lever (12) in it. The base of the light signal rod is attached to the licence plate of the motorcycle, once the motorcycle is loaded onto the unfolded trailer, figure 19 (1).

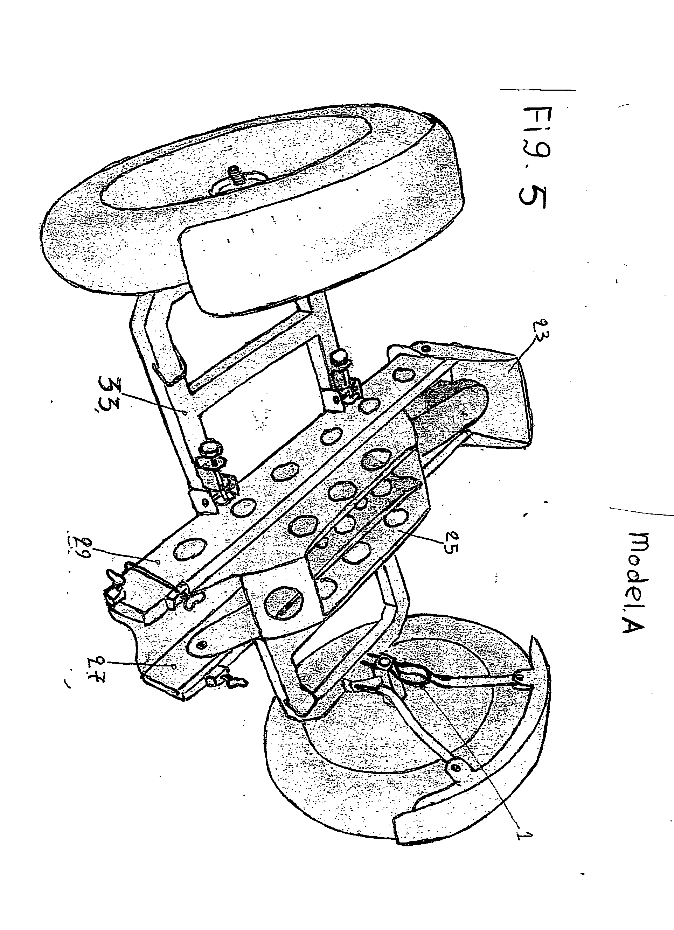

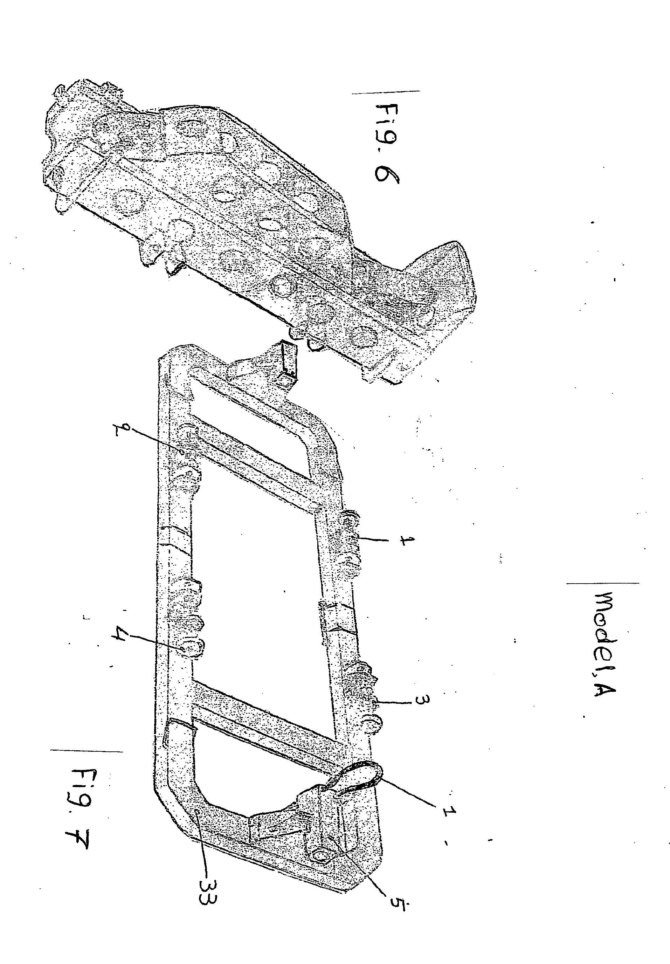

Figures 1 to 12 refer to type A in the order followed for the presentation of the different types of folding trailers.

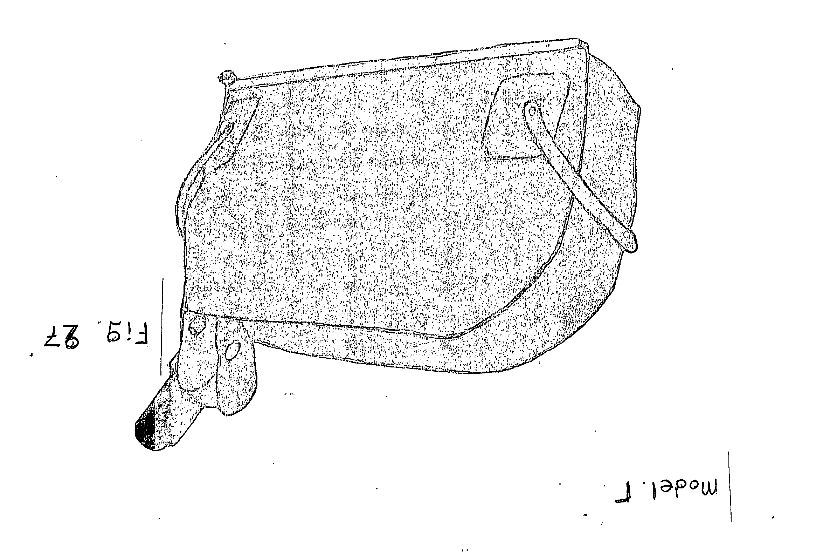

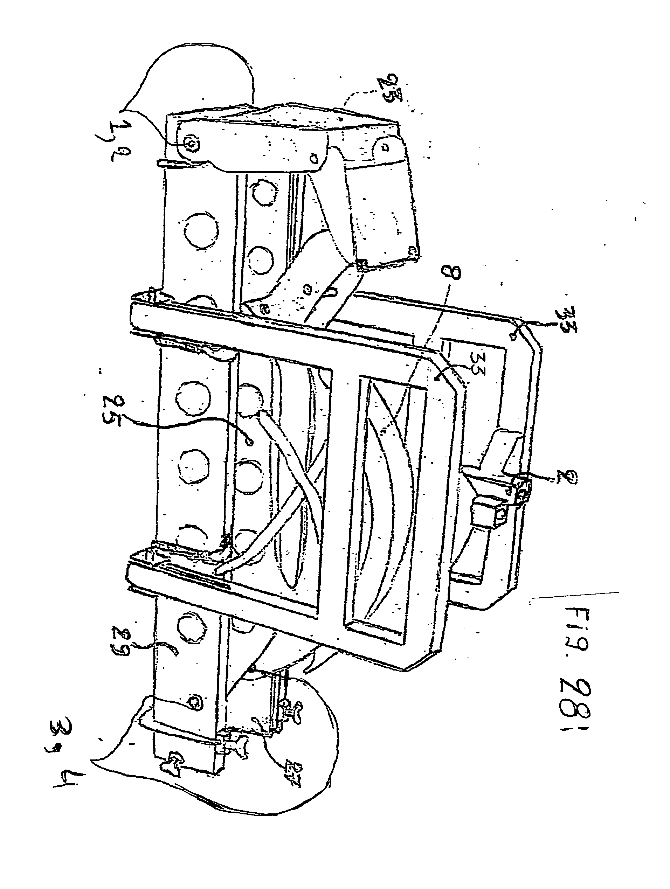

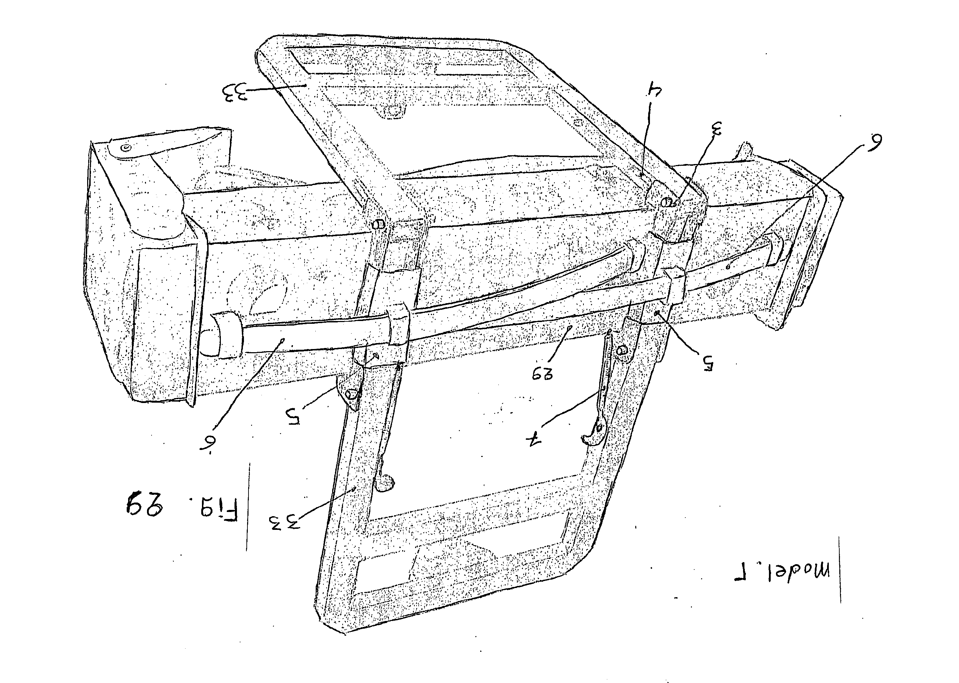

Type B, which is not detachable from the suspension frame (33). Figure 21 illustrates the completely unfolded trailer, ready to receive the motorcycle, which is pushed onto the folding trailer with the addition of the ramp (21) hanging from the rear end of part (23) of the folding trailer, by means of two pins (2) & (3), fitted on the two ends of ramp (21). The web is folded in the same way as in type A. The main difference in type B, is that the suspension frame (33) is not detachable from the folded web, figure 22. The wheels are removed in the same way as in type A, and the suspension springs pass through the arms of the suspension frame (33) as in type A, figures 17, 18.

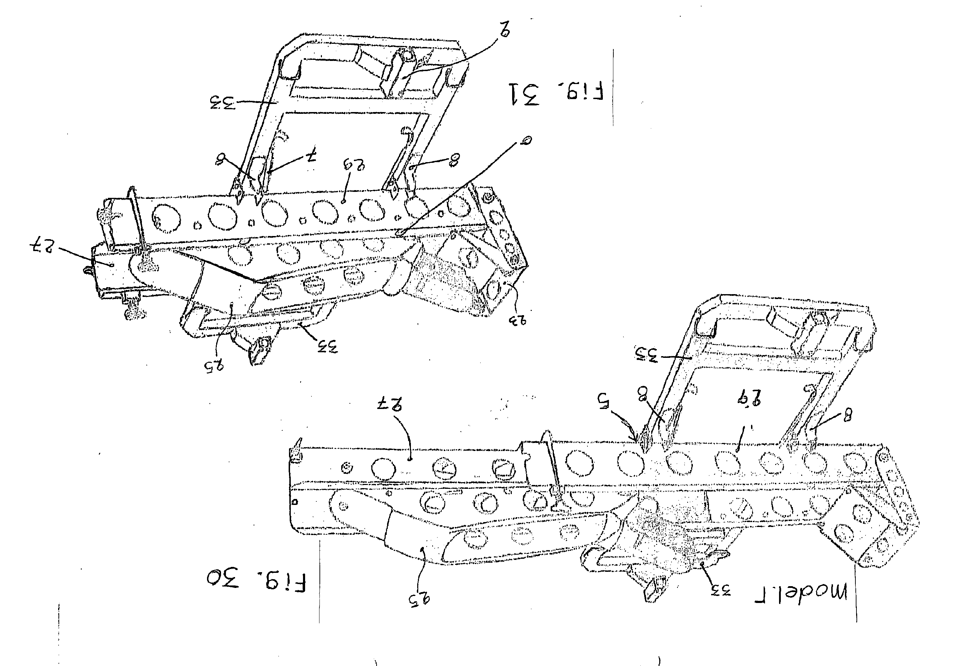

In figures 20, 25, the folding trailer is illustrated with the motorcycle loaded onto it and fastened with belts in positions (a), (b) and (c).

In figure 24, the folding trailer is illustrated completely folded and ready to be stored, while the wheels have been removed. This type of folding trailer is presented without the use of a duffel bag, due to its small volume and weight (10.5 not including the wheels) for motorcycles of small cylinder capacity, for frequent use in the city, since folding - unfolding is effected quickly in the case of type B of the folding trailer, for easy storage and taking out from the car's luggage compartment. Type B may be stored in the luggage compartment of a small car without removing the wheels, since its width, with the wheels mounted on the suspension frame is 0,83 m, figure 23, for even quicker (folding - unfolding, storage), in case of repeated, frequent transportation. The weight of the entire assembly, including the wheels is 19 Kg. Figures 20, 21, 22, 23, 24, 25 refer to type B.

Type C, which is described here, is folding and the suspension frame (33) is folded without being detached from the web. The advantage offered is that the wheels of the folded trailer may be carried in a single suitcase (duffel bag) along with the entire assembly of the folding trailer, as illustrated in figure 26, between the two halves of the suspension frame (33) when folded.

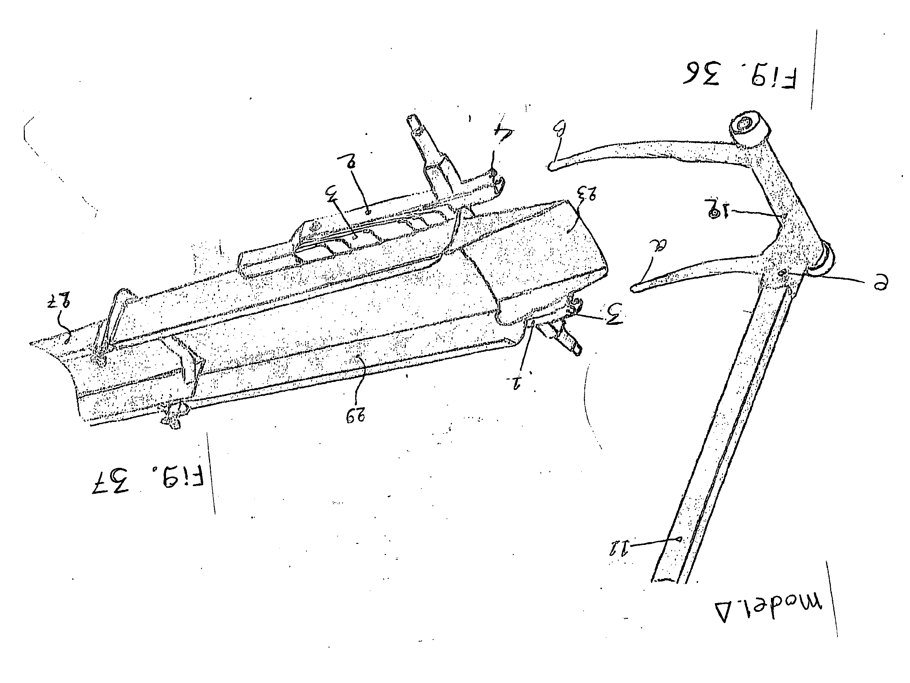

In this way, the entire folding trailer, with a total weight of 28 kg may fit in a single suitcase (duffel bag), 80 cm x 20 cm, 50 cm high. The suitcase (duffel bag) is suitable for a folding trailer capable of transporting a high cylinder capacity moto-cross motorcycle. The suitcase (duffel bag) is equipped with wheels (1) for rolling, figure 27.

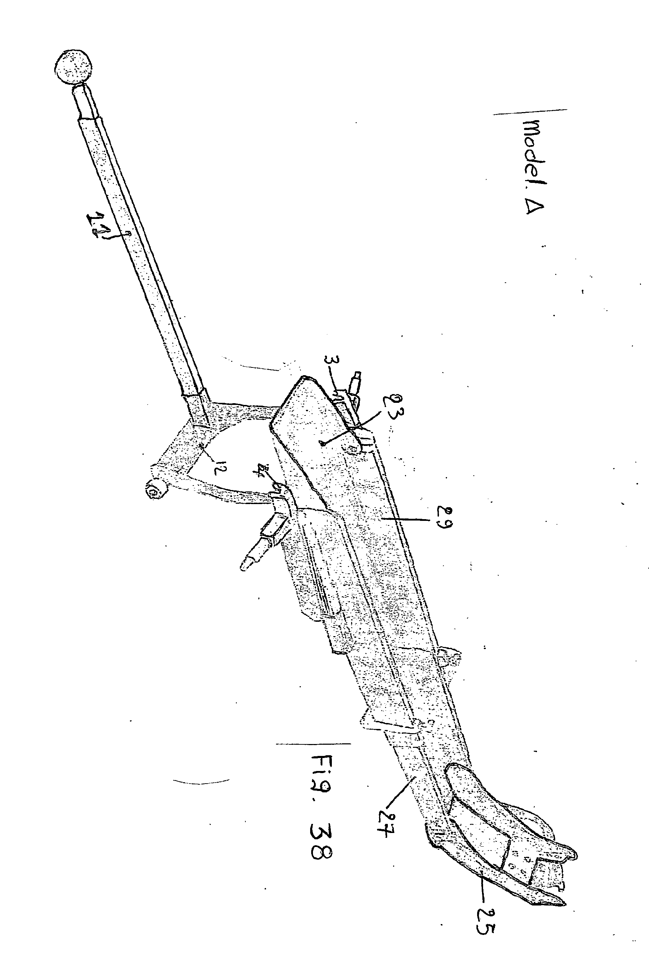

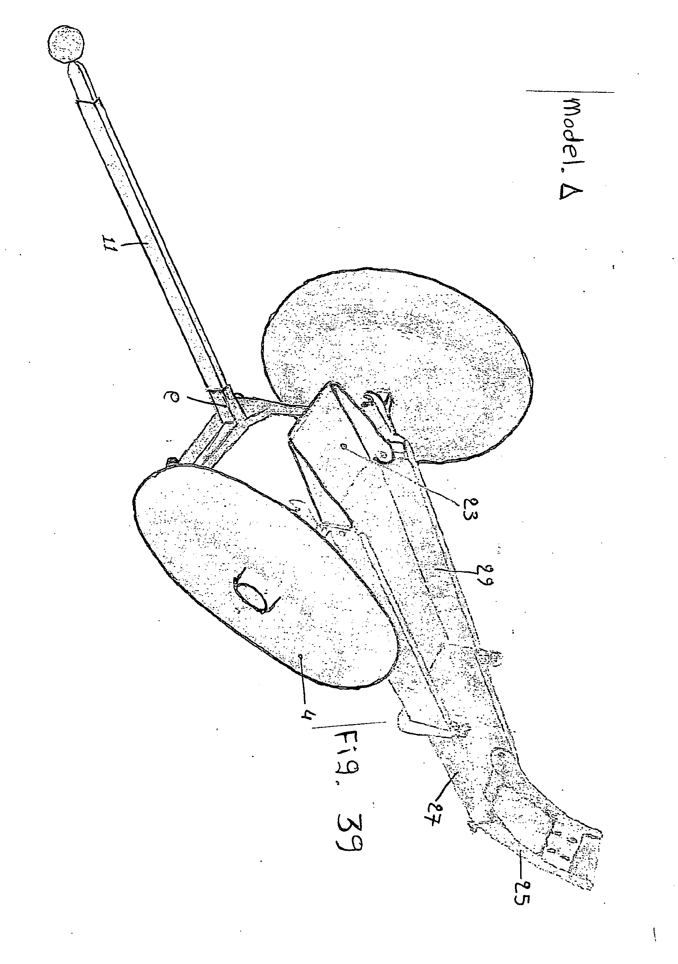

Figure 29, folding trailer of type C, illustrates the bottom of part (29), and the method of folding the half part of the suspension frame (33). The figure also illustrates the folded half frame (33), the joint assembly (3) with the end to end routes (4) bearing each half of the suspension frame (33) on their ends. The other half of the suspension frame is shown unfolded (this is effected in two steps, first unfolding and then inserting into the sockets (5) retained by the suspension springs (6) attached to the bottom part of part (29)). The half frame is retained in this position by means of springs (7) and the suspension springs (6) also work in this position.

Figures 30, 31 illustrate how part (27) slides into part (29), along with the splitting suspension frame (33) of frame C, unfolded and retained in this position by means of springs (7) within the sockets retained by the springs. The small springs (8) are intended for keeping each half of the suspension frame (33). When it is folded, figure 32, it is retained in closed position by means of slight wedging (clasping) by means of the small springs (8) in the top part of parts (29), at point (σ), illustrated in figure 31, so that the folded suspension frame (33) does not fall on its own.

In figure 32, folding trailer of type C with all its components (web parts and suspension frame) folded and ready for storage.

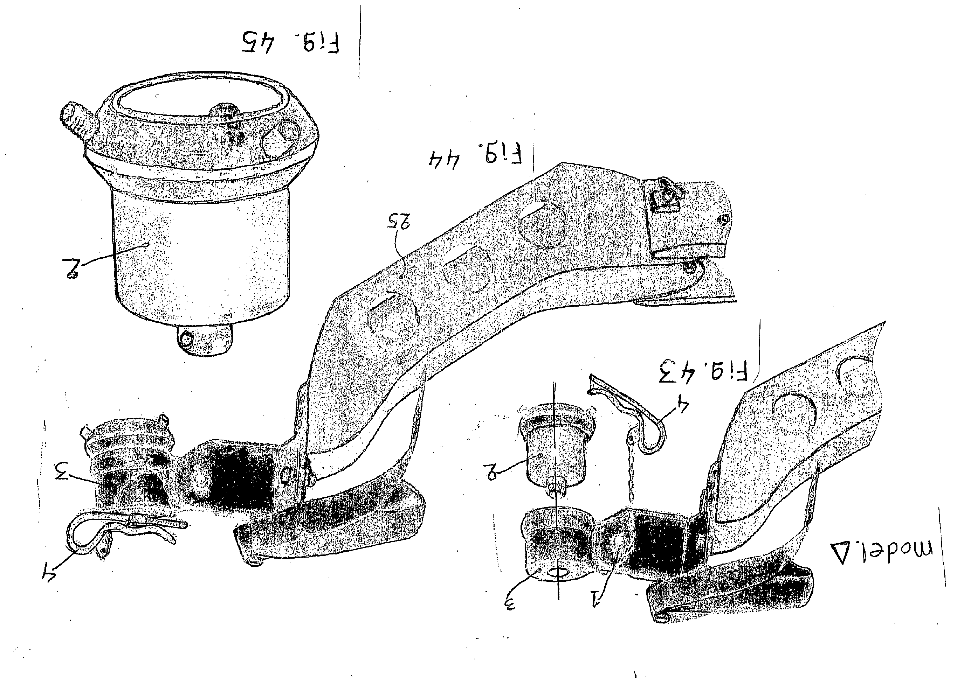

Figure 33, folding trailer of type C, completely unfolded, in order to receive the motorcycle, with the help of a ramp (21) that is mounted on part (23) for pushing the motorcycle in order to load it.

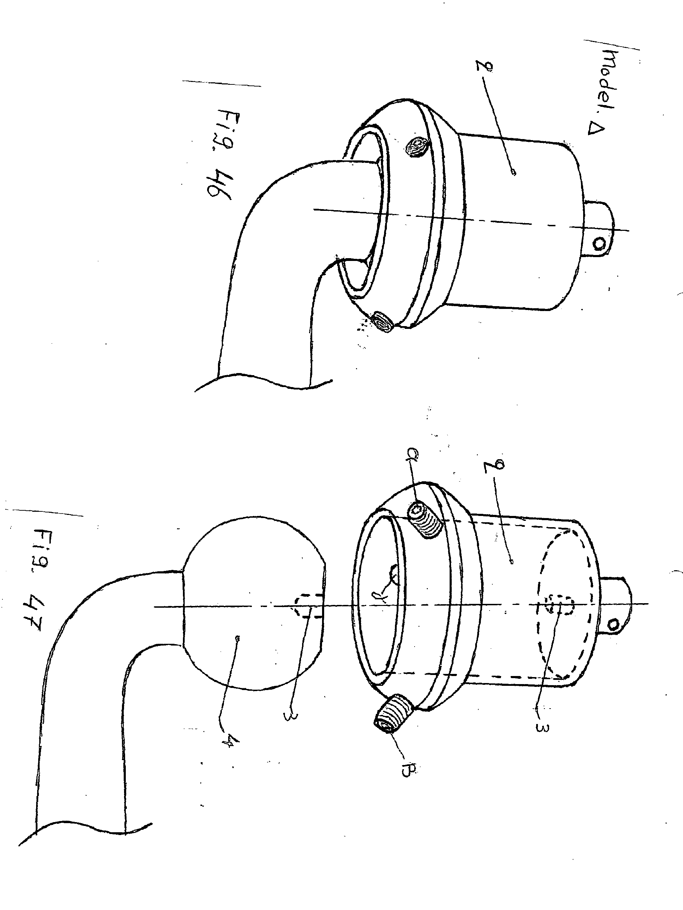

Figure 34 illustrates the fastening belt (c) that embraces the motorcycle from the saddle. The ends are hooked in loops (1, 3) at points (5, 6). The belt is tightened using the tool provided (4).

Type D. This type does not have a suspension frame, as in the case of the three types described above. This type of folding trailer is offered with two wheels and with one wheel. The suspension of these wheels consists of two forks (1 - 2) in case of two wheels and one fork in case of one wheel, that is adjacent to part (29) and bears axles (a) & (b), figure 41 that are inserted and run into hubs (c) & (d), figure 40.

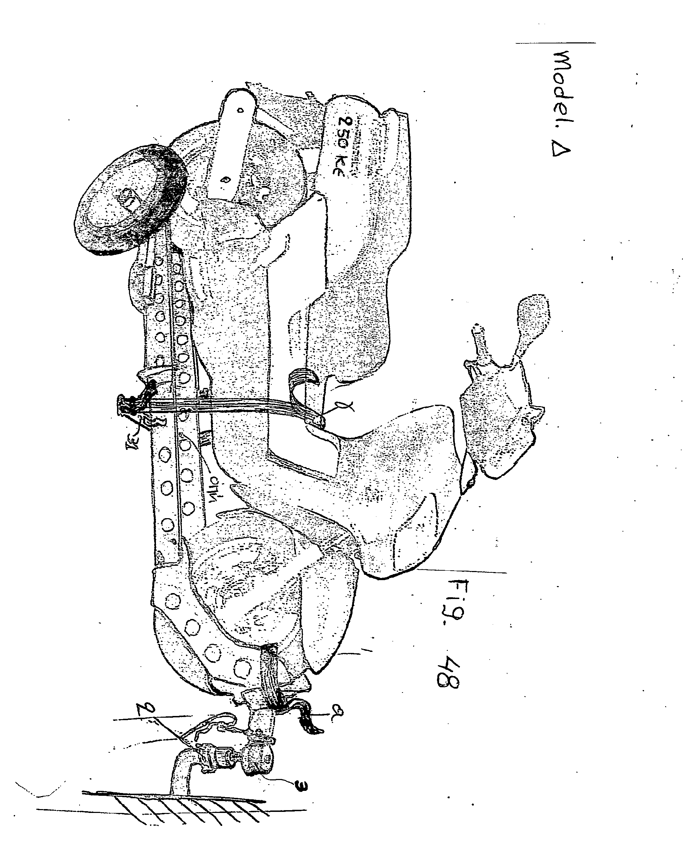

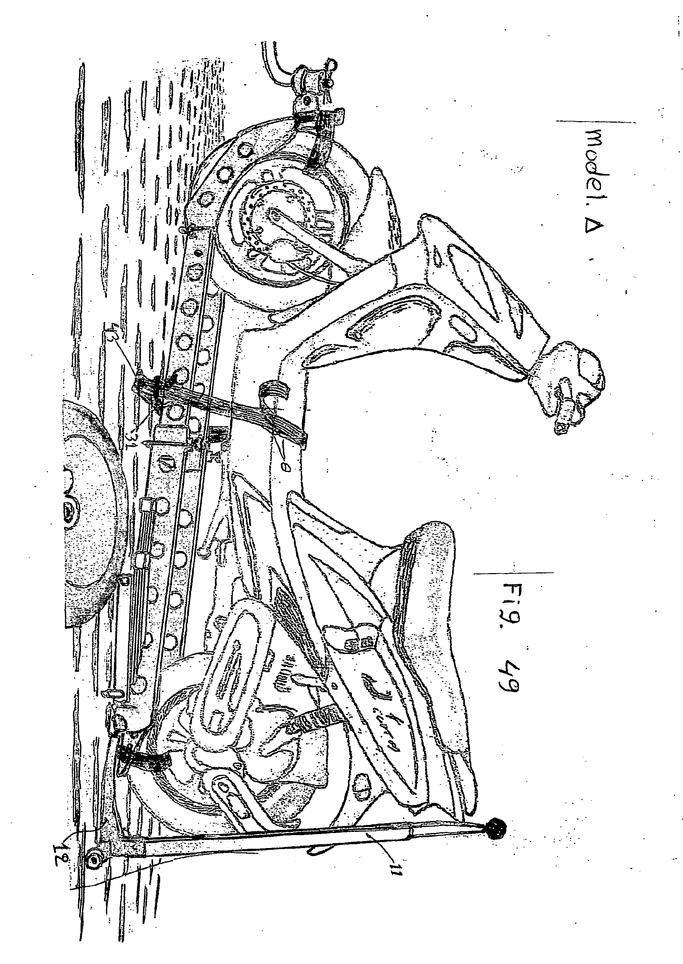

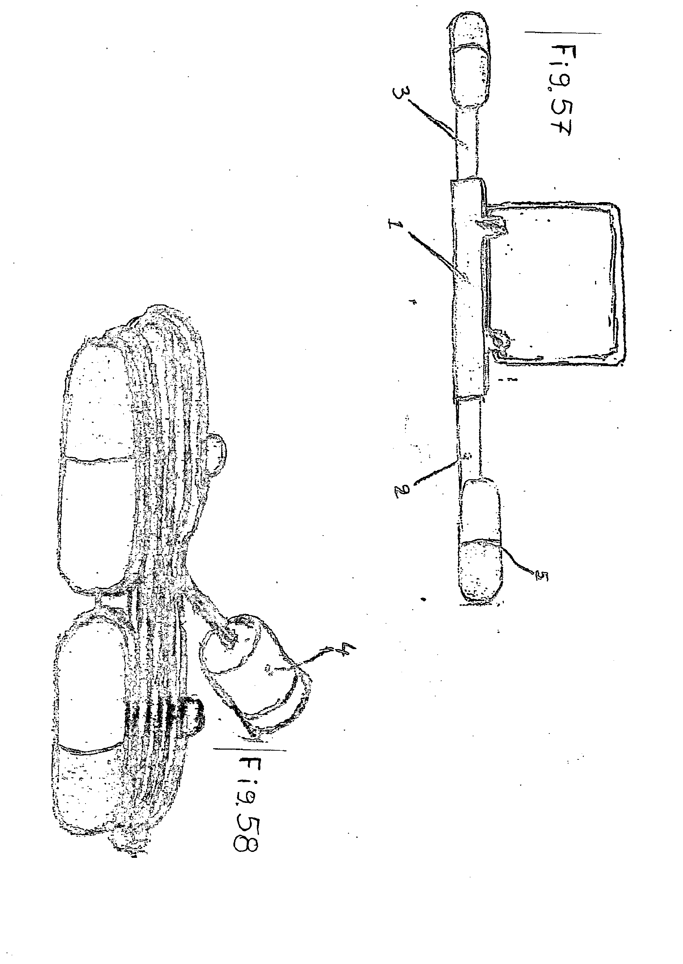

Also, part (29) bears the suspension springs (3) & (4) on each end, figure 41. The two forks are easily removed with a safety pin (5) that is located under part (29), figures 40-41.
The two removable forks (1-2_ enter into the gap formed when the web is folded and ready for storage, figure 54. This enters into a small duffle bag, 70 cm x 23 cm, height 22 cm, for a scooter type motorcycle, figure 48.
Another difference between type D of the folding trailer and the other three types mentioned above, in the order of the respective presentation is the towing grip on the car's towbar. Type D does not have a commercial grip. The commercial towing grip moves freely to all directions onto the towbar's ball. This is the type of grip that the tree types (A-B-C) of folding trailer are equipped with.
In type D of the folding trailer described here, the towbar performs only two movements, one for up and down, figure 43 joint (1) and the other for turning left - right [ cylinder (2) turns inside the hub (grip) (3) and when the hub (3) enters and embraces the cylinder (2) in this position, it locks by means of pin (4), figure 44].
This type of grip, with a cylinder instead of a ball (the cylinder is mounted on the towbar ball, figure 45), is tightened with three screws, a-b-c, figure 46-47, and the folding trailer cannot tip to the left or right (capsize) This special type of grip that the folding trailer of type D is equipped with, holds it in place so as to prevent capsizing.
The solution for sloped or rough road pavement is offered by the independent suspension of the wheels. The small axle track is also helpful in this regard, figures 35-39-42.
Moreover, type D of this folding trailer may also run on a single wheel, figures 49-50-51-52-53-54 in case of low weight motorcycles. This is possible due to the fact that the wheel is very close to the centre of gravity of the folding web, figure 52.
In this type of folding trailer (type D), with one or two wheels, the motorcycle is not loaded in the same way as the previous three types A-B-C, in which a;ramp is added to this effect. In type D of the folding trailer, whether it has one or two wheels, the motorcycle is loaded as follows: once the trailer is unfolded, figure 37 and forks (1) & (2) are mounded, the trailer is connected to the car's towbar (after installing the special cylinder (2) figure 46 onto the towbar's ball), before mounting the wheels on the folding trailer, figure 37.

The motorcycle is pushed onto the trailer and fastened to it. Then, the folding trailer is lifted (with the motorcycle on it) using a special fork type (12) lifting lever, and placing the fork ends into sockets (3) & (4) on the rear ends of forks (1) & (2), figure 36, and operating the lever downwards, to such a height, figure 38, that allows for mounting the wheels, figure 39. Then, the special lever is removed, turning its arm in the opposite direction and upwards, figure 42. In this way, the wheels are set onto the ground and the lifting lever is totally released. (The lever is the same in the case of a single wheel folding trailer too, but in this case, the fork has only one member since this type of folding trailer has only one suspension fork, figure 50. Then, the rod structure bearing the hazard and brake signal lights is mounted to the rear end of the motorcycle, onto the licence plate, figure 19(1).
(Figures 35-36-37-38-39-40-41) refer to type D with two wheels).

Fastening of the motorcycle on the folding trailer. This is realised in a simple way, using velcro belts. The preferable fastening order is as follows: The front wheel is fastened first and then the rear wheel, belts (a), (b), figure 19; embrace the wheel rims. Finally, the middle belt (c) is fastened, embracing the motorcycle at the point where the rider's feet rest in case of a scooter. The belt ends are hooked into the loops (43) on the bar (31) added to the bottom part of part (27), while a bar (31) is only added for a second fastening of a scooter, figure 49. Tightening is effected in a simple way, using the special hand tool (4), figure 34.

Another way of fastening the motorcycle on the folding trailer is with one or two bars, figure 55 (1, 2) or with belts, figure 56 (3, 4). Fastening with bars: these are two metal rods permanently fixed at points (7, 8) of the suspension frame (33) of the folding trailer, figure 55, with joints that allow tilting to all sides. The other ends bear a hole and a regulating screw for adjusting their length. The holes are matched with the screws (wing type screws) (9) on the ring (10) fixed onto the rear wheel, figure 55.

Fastening with belts: figure 56 (3, 4) is effected using the hooks at their ends, that are inserted in the loops (11, 12) of the suspension frame (33) of the folding trailer. However, the belt is initially passed through and around the wheel rim once. The belts are tightened by means of wrench type fasteners, figure 56 (5, 6).

A sliding bar (the two parts (3) (2) are inserted into the base (1)) is added and removed from the licence plate of the motorcycle, figure 19 (1), for the purpose of light signalling. The sliding bar bears electrical braking and hazard signals (5) at its ends. It is fixed onto the licence plate by means of two screws (6) (wing type). The signage bar in figure 58 is closed and a cable is wound on it that bears a plug (4) for connection to the car outlet.

## Claims

1. The folding trailer for transporting motorcycles is presented in four types, A-B-C-D, and is **characterised by** the fact that it is foldable, minimising its volume and allowing for storage in a suitcase (duffel bag), figures 8-9, with approximate dimensions 72x25 cm, height 22 cm and weight 17.5 kg. These are made up of two main parts and two wheels. The first part consists of four parts (25, 27, 29, 23) for all four types, that make up the folding web, figure 1. The four parts (25, 27, 29, 23), figure 5, fold and slide into each other in such a way that allows carrying in a suitcase. Folding of the web is effected by means of joints (1), (2) that are fitted at the ends of parts (23), (25), where they form articulations with parts (27), (29) and part (27) slides into part (29), figures 4-5.

2. The second part of folding trailer types A-B, is the suspension frame (33), where the web consisting of parts (25-27-29-23) figure 5, is mounted. The characteristic of the suspension frames (33) of types A-B is the position of these springs, figure 17-18, which pass through the arms.

3. The folding trailer of type C has a second part (suspension frame (33)) that is **characterised by** the fact that the frame (33) is not detached from the folding web, but the web folds onto its sides, figure 28.

4. Another characteristic of the folding trailer of type C is the position and arrangement of the springs, figure 29 (6), which are mounted at the bottom of the part (29), parallel to it.

5. The hubs (2) at the ends of the suspension frames (33) of the folding trailers of type A-B-C only, figures 15-16, are **characterised by** the fixing method of the wheel axles (3) with the pin (1).

6. The characteristic of the folding trailer of type D, is that the suspension springs are located on the sides of part (29), parallel to it, figures 40-41 along with the forks that are aligned in the same way under the springs, and that it has no second part, i.e. no suspension frame (33).

7. Another characteristic of the folding trailer of type D is that the motorcycle is loaded, figure 49, and then the entire trailer is lifted by means of a special lever (11), (12), figure 38, and then the wheels are mounted, figure 39.
